(19)

**Europäisches Patentamt**
**European Patent Office**
**Office européen des brevets**

(11)  **EP 4 557 180 A1**

(12)  **EUROPEAN PATENT APPLICATION**

(43) Date of publication:
21.05.2025  Bulletin 2025/21

(21) Application number: 23210772.2

(22) Date of filing: 17.11.2023

(51) International Patent Classification (IPC):
$G06N\ 7/00^{(2023.01)}$        $G06N\ 20/00^{(2019.01)}$

(52) Cooperative Patent Classification (CPC):
G06N 20/00; G06N 7/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• Lemon Inc.
Grand Cayman, KY1-1205 (KY)
• Oxford University Innovation Limited
Oxford, OX2 0JB (GB)

(72) Inventors:
• TON, Jean-Francois
London, EC2Y 5EB (GB)
• TAUFIQ, Muhammad Faaiz
London, EC2Y 5EB (GB)
• DOUCET, Arnaud
Oxford, OX1 3LB (GB)
• CORNISH, John Robert Macaulay
Oxford, OX1 3LB (GB)

(74) Representative: Dentons UK and Middle East LLP
One Fleet Place
London EC4M 7WS (GB)

(54)  **METHOD OF POLICY EVALUATION FOR CONTEXTUAL BANDITS**

(57)    A computer-implemented method of policy evaluation for a contextual decision-making policy, wherein the contextual decision-making policy is used to make one or more decisions, where the outcome of each decision depends upon a context in which the decision is made, the method comprising: obtaining an existing contextual decision-making policy; obtaining a first dataset of decisions made using the existing contextual decision-making context, wherein the first dataset further includes the respective outcome and context of each decision; obtaining a to-be-evaluated contextual decision-making policy; using machine learning to train an outcome model for the to-be-evaluated contextual decision-making policy, based on the existing contextual decision-making policy, the to-be-evaluated contextual decision-making policy and the first dataset; and estimating an expectation for the to-be-evaluated contextual decision-making policy, based on the outcome model.

Obtain a first decision-making policy $\pi_1(A\,|X\,)$ — S110

Obtain a first dataset $D_1$ generated using the first decision-making policy — S120

Obtain a second decision-making policy $\pi_2(A\,|X\,)$ — S130

Calculate a policy ratio $\rho(A, X)$ between the first and second decision-making policies — S140

Calculate a density distribution $d_1(X, A, Y)$ for the first dataset $D_1$ — S150

Train parametric model $f_\Phi(Y)$ to minimize $\mathbb{E}[(\rho(A, X) - f_\Phi(Y))^2]$ — S160

Estimate expectation $\mathbb{E}_2[Y]$ for policy $\pi_2(A\,|\,X)$ as $\frac{1}{n}\sum_{j=1}^{p} Y_j \cdot f_\Phi(Y_j)$ — S170

**Fig. 1a**

EP 4 557 180 A1

| Obtain a first decision-making policy $\pi_1(A \mid X)$ | S110 |

| Obtain a first dataset $D_1$ generated using the first decision-making policy | S120 |

| Obtain a second decision-making policy $\pi_2(A \mid X)$ | S130 |

| Calculate a policy ratio $\rho(A, X)$ between the first and second decision-making policies | S140 |

| Calculate a density distribution $d_1(X, A, Y)$ for the first dataset $D_1$ | S150 |

| Train parametric model $f_\Phi(Y)$ to minimize $\mathbb{E}[(Y\rho(A, X) - f_\Phi(Y))^2]$ | S165 |

| Estimate expectation $\mathbb{E}_2[Y]$ for policy $\pi_2(A \mid X)$ as $\frac{1}{n}\sum_{j=1}^{p} f_\Phi(Y_j)$ | S175 |

**Fig. 1b**

**Description**

*TECHNICAL FIELD*

The application is directed to methods for machine learning optimization for making decisions in systems involving probabilistic outcomes. The application also provides devices, computer programs and computer-readable media suitable for performing the described methods.

*BACKGROUND*

Systems involving probabilistic outcomes can be modelled using a so-called "contextual bandit". A "contextual bandit" model is similar to a "one-armed bandit" model but with additional contextual information.

In a "one-armed bandit" model, for each input value, the outcome is randomly chosen from an (initially unknown) probability distribution. For example, each outcome $Y$ from the system may be the result of a function $f(R,A)$, where R represents an uncontrolled, randomly varying factor, and $A$ represents a controlled decision parameter (for example, in the original gambling context, $A$ is the time at which the arm of the one-armed-bandit is pulled). Each outcome $Y$ may fall within a discrete or continuous set of possible outcomes $\mathcal{Y}$. Each decision parameter $A$ may fall within a discrete or continuous set of possible actions or combinations of actions $\mathcal{A}$. When applying machine learning to such a system, a desirable training goal is to produce a decision-making policy which can choose a decision parameter $A$ to maximize the expected outcome $Y$. Of course, while the model can be trained such that the expected outcome is maximized at a statistical level, the individual outcome for any given decision will still have an element of randomness due to the uncontrolled factor(s) $R$. The uncontrolled, randomly varying factors $R$ may not be directly observable, and the relationship $Y = f(R,A)$ may be alternatively expressed as a probability distribution $p(Y \mid A)$.

A "contextual bandit" differs from the one-armed bandit in that a maximum outcome and/or the probability distribution of outcomes depends upon some contextual information, where the contextual information is known. In other words, in a contextual bandit, the outcome $Y$ from a decision may be expressed as $p(Y \mid X, A)$, where $X$ represents one or more contextual parameters, and $A$ represents one or more decision parameters of the decision. Each outcome $Y$ may fall within a discrete or continuous set of possible outcomes $\mathcal{Y}$. Each decision parameter $A$ may fall within a discrete or continuous set of possible actions or combinations of actions $\mathcal{A}$. Each contextual parameter $X$ may fall within a discrete or continuous set of possible contexts or combinations of contexts $X$. When applying machine learning to such a system, a desirable training goal is to produce a decision-making policy which can receive the contextual parameter(s) $X$ and, using those contextual parameters, choose decision parameter(s) $A$ to maximize the expected outcome $Y$.

There are many real-world decisions where a person or computer tasked with making the decision has some contextual information and is required to make a decision with the best expected outcome. For example, a decision to prescribe a medication (decision parameter) may be taken based on a patient's medical context (contextual parameter) with the goal of improving patient health (outcome). As another example, a decision to serve a specific advertisement (decision parameter) may be taken based on a user interest profile (contextual parameters) with the goal of maximizing the chance of a click-through (outcome). As such, it is desirable to provide improved machine learning techniques for "contextual bandit" scenarios.

When observing a "contextual bandit"-type system, it is possible to associate individual outcomes $Y_i$ with contextual parameters $X_i$ and decision parameters $A_i$ that precede the outcome. The parameter-outcome pairing of an outcome $Y_i$ and parameters $X_i$, $A_i$ may be used to define an "event" $(X_i, A_i, Y_i)$, resulting from the chosen decision parameters $A_i$. In terms of data gathering, it is not necessary to assume that there is any causal relationship between outcome $Y_i$ and the parameters $X_i$, $A_i$. The details of a "contextual bandit" system will often indicate how to associate an individual outcome with parameters (for example, in the original gambling example of the "one-armed bandit", events cannot overlap in time and the outcome $Y_i$ is the next outcome that occurs after the decision $A_i$). Even in a more complex scenario where it is not initially clear how to associate outcomes $Y_i$ with parameters $X_i$, $A_i$, the existence of any correlation or causation relationship can be subsequently tested using regression analysis, and so the way in which event data is gathered can itself be refined using machine learning (although that is not the subject of this application).

However, an additional challenge in this field is how to obtain relevant data for improving the decision-making policy. More specifically, each observed event $(X_i, A_i, Y_i)$ is the result of whichever decision-making policy was used to choose the decision parameters $A_i$. As a result, a dataset of events that was obtained using one decision-making policy may have a distribution that is not fully representative of the event distribution that could be expected for another decision-making policy. At face value, this means that it is not possible to compare two decision-making policies, without obtaining a new dataset for each policy. This would be a significant burden, especially in scenarios where a large number of policies need to be explored in order to optimize the decision-making policy.

There have been some previous attempts to solve this problem using Off-Policy Evaluation (OPE). OPE techniques provide ways to estimate the expectation of the outcome Y for a first policy using a dataset obtained using a different second policy (i.e. without obtaining a dataset for the first policy). These techniques include using the Inverse Probability Weighting (IPW) estimator, the Doubly Robust (DR) estimator and the Marginalised Inverse Propensity Score (MIPS) estimator.

### SUMMARY

The known OPE techniques primarily account for the policy shift by re-weighting the data using a ratio of the first and second policies to estimate the expectation of the outcome Y. This can be problematic as it may lead to high variance in the estimators in cases of substantial policy shifts. The inventors have devised an alternative OPE technique, which they call a Marginal Ratio (MR) estimator, as set out in the first aspect below. The inventors have found that the MR estimator is likely to have lower variance than the known OPE techniques in many scenarios. Additionally, the inventors have found that the alternative OPE technique scales better than known OPE techniques, in terms of the processing resources required for evaluation, as the granularity or range of possible parameters $X_i$, $A_i$ increases. As such, the invention addresses the technical problem of improving processing efficiency for off-policy evaluation.

According to a first aspect, the application provides a method as set out in claim 1. Optional features of the method are set out in the dependent claims.

The method may be computer-implemented. For example, the method may be implemented in software instructions that are suitable for execution by a processor apparatus. Where the method is implemented in software instructions, the instructions may be stored in a non-transitory form in a computer readable medium. The instructions may further form part of a data signal that is suitable for transmission between computer apparatuses. The method may alternatively be implemented in computer hardware that is specifically adapted to perform the method.

### BRIEF DESCRIPTION OF THE DRAWINGS

Embodiments of the present invention are described below, by way of example, with reference to the following drawings.

Figures 1a and 1b are flowcharts schematically illustrating alternative methods of policy evaluation for a contextual decision-making policy;

Figure 2a is a graph showing the Mean Square Error (MSE) for the OPE technique of the application (MR) by comparison to the MSE for some known OPE techniques, as a function of the size $p$ of a dataset $D_2$; Figure 2b shows variance for the same OPE techniques as a function of size p;

Figure 2c is a graph showing the MSE for MR by comparison to MSE for some known techniques, as a function of a parameter $\alpha^*$ wherein $\alpha^*$ indicates a degree of difference between an existing policy $\pi_1$ and a to-be-evaluated policy $\pi_2$; Figure 2d shows variance for the same OPE techniques as a function of parameter $\alpha^*$;

Figure 3 is a table showing MSE for MR by comparison to MSE for some known OPE techniques, when applied to several well-known classification datasets;

Figure 4 is a block diagram illustrating an example computing system that may be used to implement any of the methods described here.

### DETAILED DESCRIPTION

Embodiments of the invention are described below by way of example only. These examples represent the best mode of putting the invention into practice that are currently known to the applicant although they are not the only ways in which this could be achieved. The description sets forth the functions of the example and the sequence of steps for constructing and operating the example. However, the same or equivalent functions and sequences may be accomplished by different examples.

Herein the "colon equals" operator symbol := indicates a definition, where the mathematical expressions on either side of the symbol are equal by definition.

Herein the "vertical line" operator symbol | indicates a pre-requisite relationship for a probability. More specifically, a probability distribution $p(B \mid C, D)$ describes the probability that event $B$ occurs given that it is known that conditions C and $D$ have occurred.

Herein the tilde operator symbol ~ indicates that two mathematical expressions are approximately equal. For example, the right operand may be an estimated value of the left operand.

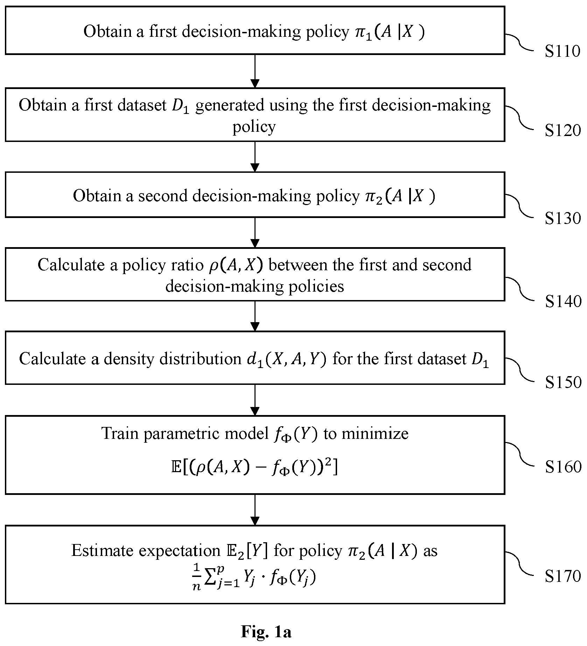

Figure 1a is a flow chart schematically illustrating a computer-implemented method of policy evaluation for a contextual decision-making policy according to a first embodiment. The inventors call this first embodiment the Marginal Ratio (MR) estimator method.

The method may be performed by a single processing apparatus, or a plurality of connected processing apparatuses. For example, the method may be performed in a cloud computing apparatus.

The method is applicable to any "contextual bandits"-type decision, in which an outcome $Y$ has a probability distribution $p(Y \mid X, A)$. The contextual decision-making policy is a probability distribution $\pi(A \mid X)$ for determining one or more decision parameters $A$ based on one or more contextual parameters $X$.

As an example, in this embodiment, the method is specifically applied to evaluating a policy for making advertising decisions, wherein each decision comprises selecting an advertisement $A$ to be presented to a respective user based on contextual parameters $X$ comprising a respective user profile of the user, and the user is any one of a plurality of possible users. In this embodiment, the outcome $Y$ may be either "the user engages with the advertisement" or "the user does not engage with the advertisement". Here "engaging" may mean, for example, clicking on an advertisement, watching a skippable video advertisement in part, watching a skippable video advertisement in full, or may be defined using any other suitable discrete or continuous measure of engagement.

Referring to Figure 1a, at step S110, the method comprises obtaining an existing contextual decision-making policy $\pi_1(A \mid X)$. For example, $\pi_1(A \mid X)$ may be a policy that is already deployed in a real-world "contextual bandits"-type scenario for which decisions need to be made.

At step S120, the method comprises obtaining a first dataset $D_1$ comprising $n$ events $\{(X_i, A_i, Y_i)\}_{i=1}^{n}$ generated by making a respective $n$ decisions according to the existing contextual decision-making policy $\pi_1(A \mid X)$. For example, where $\pi_1(A \mid X)$ is deployed in a real-world scenario, the dataset $D_1$ may be obtained by logging decisions and events as they occur in the scenario.

At step S130, the method comprises obtaining a to-be-evaluated contextual decision-making policy $\pi_2(A \mid X)$. The policy $\pi_2(A \mid X)$ may be a policy that has not yet been deployed in a real-world scenario, and may be devised by, programmatically or manually, incrementally varying one or more parameters of an existing policy, or by, programmatically or manually, generating an entirely new policy. It should be noted that policies $\pi_2(A \mid X)$ and $\pi_1(A \mid X)$ are alternative possible policies which can be used to make the same type of decision, i.e. both policies are applicable to a same "contextual bandits"-type scenario. Typically, either policy would be used to make a plurality of decisions as events occur in the scenario.

Steps S110, S120 and S130 may be performed in any order.

At step S140, the method comprises calculating a policy ratio $\rho(A, X)$, wherein:

$$\rho(A, X) = \frac{\pi_2(A \mid X)}{\pi_1(A \mid X)}.$$

At step S150, the method comprises calculating a multi-dimensional density distribution $d_1(X, A, Y)$ of points of the first dataset $D_1$, wherein the multi-dimensional density distribution $d_1(X, A, Y)$ has dimensions of the decision parameters $A$, the contextual parameters $X$ and the outcome $Y$. This has the effect that $d_1(X, A, Y)$, based on the finite dataset $D_1$, approximately indicates the underlying distribution of outcomes from the system in which decisions are being made when applying the existing contextual decision-making policy $\pi_1(A \mid X)$. In other words,

$$d_1(X, A, Y) \sim p(Y \mid X, A) \cdot \pi_1(A \mid X) \cdot p(X)$$

wherein $p(X)$ is the probability of contextual parameter(s) $X$ occurring in a system to which the decisions are being applied, and $p(Y \mid X, A)$ is the probability of outcome $Y$ occurring in the system for an event in which the decision parameters $A$ and the contextual parameters $X$ have occurred. Step S150 may be performed at any time after step S120 and before step S160.

At step S160, the method comprises using machine learning to train a parametric model $f_\Phi(Y)$, wherein the parameters $\Phi$ of the parametric model $f_\Phi(Y)$ are trained to minimize the following expression:

$$\mathbb{E}\left[\left(\rho(A, X) - f_\Phi(Y)\right)^2\right] := \int \left(\rho(A, X) - f_\Phi(Y)\right)^2 \cdot d_1(X, A, Y) \cdot dY \cdot dA \cdot dX.$$

For example, $f_\Phi(Y)$ may be modelled as a neural network which receives an outcome $Y$ as an input and produces

a value $f_\Phi(Y)$ as an output, where the parameters $\Phi$. This neural network may be repeatedly adjusted and used to evaluate $\mathbb{E}\left[\left(\rho(A,X) - f_\Phi(Y)\right)^2\right]$ in order to explore the parameter space of possible values for parameters $\Phi$ and find a parameter set that minimizes $\mathbb{E}\left[\left(\rho(A,X) - f_\Phi(Y)\right)^2\right]$.

In this first embodiment, $f_\Phi(Y)$ approximately corresponds to a global probability $p_2(Y)$ of the outcome $Y$ for all possible values of $A$ and $X$ when using the to-be-evaluated contextual decision-making policy $\pi_2(A \mid X)$. In other words, the above-recited method steps have the effect that:

$$f_\Phi(Y) \sim \int p(Y \mid X, A) \cdot \pi_2(A \mid X) \cdot p(X) \cdot dA \cdot dX$$

wherein $p(X)$ is the probability of contextual parameter(s) $X$ occurring in a system to which the decisions are being applied.

At step S170, the method comprises estimating an expectation $\mathbb{E}_2[Y]$ for the to-be-evaluated contextual decision-making policy $\pi_2(A \mid X)$ based on a second dataset $D_2$, wherein the second dataset $D_2$ comprises p events $\left\{\left(X_j, A_j, Y_j\right)\right\}_{j=1}^p$ generated by making a respective p decisions according to the existing contextual decision-making policy $\pi_1(A \mid X)$, and the estimated value of $\mathbb{E}_2[Y]$ is calculated as follows:

$$\mathbb{E}_2[Y] \sim \frac{1}{n} \sum_{j=1}^{p} Y_j \cdot f_\Phi(Y_j).$$

In other words, in this first embodiment, since $f_\Phi(Y) \sim p_2(Y)$, the calculation of expectation $\mathbb{E}_2[Y]$ follows the normal procedure for calculating an expectation based on a probability distribution.

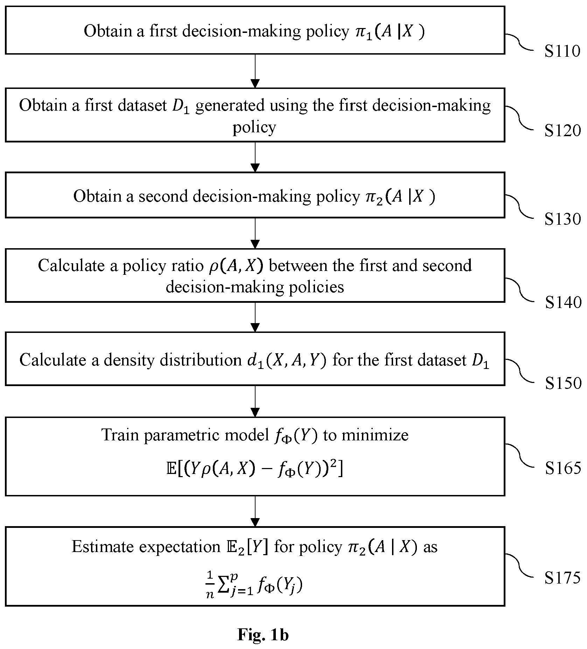

Figure 1b is a flow chart schematically illustrating a computer-implemented method of policy evaluation for a contextual decision-making policy according to a second embodiment, as an alternative to the first embodiment. The inventors call this second embodiment the MR-alt estimator method.

More specifically, steps S110 to S150 of the first embodiment are also performed for the second embodiment, and are followed by steps of training a parametric model $f_\Phi(Y)$ and using the parametric model to estimate an expectation $\mathbb{E}_2[Y]$ for the to-be-evaluated contextual decision-making policy $\pi_2(A \mid X)$. However, in step S165 of the second embodiment, the training of parametric model $f_\Phi(Y)$ is performed differently from step S160 of the first embodiment. This change in the way of training the parametric model is accompanied by differences between the way that $\mathbb{E}_2[Y]$ is calculated in step S175 of the second embodiment by comparison to the way that $\mathbb{E}_2[Y]$ is calculated in step S165 of the first embodiment.

More specifically, in step S165 of the second embodiment, an extra $Y$ factor is incorporated when training the parameters $\Phi$ of the model $f_\Phi(Y)$, and the parameters are trained to minimize the following modified expression:

$$\mathbb{E}[(Y \cdot \rho(A,X) - f_\Phi(Y))^2] := \int (Y \cdot \rho(A,X) - f_\Phi(Y))^2 \cdot d_1(X,A,Y) \cdot dY \cdot dA \cdot dX$$

This has the effect that $f_\Phi(Y) \sim Y p_2(Y)$ as a result of the machine learning step S165 of the second embodiment.

Then, in step S175 of the second embodiment, the expectation $\mathbb{E}_2[Y]$ for the to-be-evaluated contextual decision-making policy $\pi_2(A \mid X)$ is estimated based on the second dataset $D_2$ according to the following expression

$$\mathbb{E}_2[Y] = \frac{1}{n} \sum_{j=1}^{p} f_{\Phi}(Y_j).$$

In other words, in this second embodiment, since $f_{\Phi}(Y) \sim Y p_2(Y)$, the calculation of expectation $\mathbb{E}_2[Y]$ again ultimately follows the normal procedure for calculating an expectation based on a probability distribution.

Further optional features of the method are described below. These optional features are equally applicable to the first and second embodiments of Figures 1a and 1b.

In some embodiments, the method further comprises calculating a one-dimensional density distribution $d_1(Y)$ of points of the dataset $D_1$, wherein the one-dimensional density distribution $d_1(Y)$ has a dimension of the outcome $Y$; calculating an expectation $\mathbb{E}_1[Y]$ of the outcome $Y$ for the existing contextual decision-making policy $\pi_1(A \mid X)$ as

$$\mathbb{E}_1[Y] = \int Y \cdot d_1(Y) \cdot dY.$$

The expectation $\mathbb{E}_1[Y]$ may then be compared to the estimated expectation $\mathbb{E}_2[Y]$ to determine whether the to-be-evaluated contextual decision-making policy $\pi_2(A \mid X)$ is superior to the existing contextual decision-making policy $\pi_1(A \mid X)$.

For example, in applications where large values of the outcome $Y$ are preferred, a value $\mathbb{E}_2[Y]$ that is greater than $\mathbb{E}_1[Y]$ indicates that $\pi_2(A \mid X)$ is better than $\pi_1(A \mid X)$ for achieving desired outcomes. Conversely, in applications where small values of the outcome $Y$ are preferred, a value $\mathbb{E}_2[Y]$ that is lower than $\mathbb{E}_1[Y]$ indicates that $\pi_2(A \mid X)$ is better than $\pi_1(A \mid X)$ for achieving desired outcomes.

In some embodiments, calculating the one-dimensional density distribution $d_1(Y)$ comprises: integrating the multi-dimensional density distribution $d_1(X, A, Y)$ across the dimensions of the decision parameters $A$ and the contextual parameters $X$. In other words,

$$d_1(Y) := \int d_1(X, A, Y) \cdot dA \cdot dX$$

Alternatively, the one dimensional density distribution $d_1(Y)$ may be calculated directly from the first dataset $D_1$.

In some embodiments, the method comprises: estimating the expectation $\mathbb{E}_j[Y]$ of the outcome $Y$ for each of a plurality of contextual decision-making policies $\pi_j(A \mid X)$; and selecting a to-be-used contextual decision-making policy based on the estimated expectation $\mathbb{E}_j[Y]$ associated with each of the plurality of contextual decision-making policies $\pi_j(A \mid X)$.

In other words, the method can be used generally for comparing and/or ranking a set of contextual decision-making policies, by calculating an expectation $\mathbb{E}[Y]$ associated with each policy. Such comparisons or rankings can then be used to identify a preferred policy for real-world use.

In some embodiments, the first dataset $D_1$ and the second dataset $D_2$ are the same dataset. In other embodiments, the first dataset $D_1$ and the second dataset $D_2$ are different datasets, the method further comprising obtaining the second dataset $D_2$. Using the same dataset for training the parameters $\Phi$ and for estimating the expectation $\mathbb{E}_2[Y]$ has the advantage of enabling a larger dataset at each stage (because all available event data can be included in a single dataset). On the other hand, using different datasets for different steps of the method reduces the risk of bias in the expectation result.

In some embodiments, the obtaining the existing contextual decision-making policy $\pi_1(A \mid X)$ may not be directly available. For example, policy $\pi_1(A \mid X)$ may apply to decisions made by a third party, such that the persons requiring the policy evaluation of the to-be-evaluated policy do not have access to the existing policy.

In such scenarios, the existing contextual decision-making policy $\pi_1(A \mid X)$ may be estimated by determining a probability distribution $\hat{\pi}_1(A \mid X)$ of the decision parameters $A$ and the contextual parameters $X$ in $q$ events

$\{(X_i, A_i, Y_i)\}_{i=1}^{q}$ of the first dataset $D_1$, wherein $q \leq n$. The estimated distribution $\hat{\pi}_1(A \mid X)$ may then be used instead of the $\pi_1(A \mid X)$ in step S 110 as described above.

Alternatively, the existing contextual decision-making policy $\pi_1(A \mid X)$ may be estimated by: obtaining a third second dataset $D_3$ comprising $s$ events $\{(X_k, A_k, Y_k)\}_{k=1}^{s}$ generated by making a respective s decisions according to the existing contextual decision-making policy $\pi_1(A \mid X)$, and determining a probability distribution $\hat{\pi}_1(A \mid X)$ of the decision parameters $A$ and the contextual parameters $X$ in the $s$ events $\{(X_k, A_k, Y_k)\}_{k=1}^{s}$ of the third dataset $D_3$. The estimated distribution $\hat{\pi}_1(A \mid X)$ may then be used instead of the $\pi_1(A \mid X)$ in step S110 as described above.

In some embodiments, the to-be-evaluated contextual decision-making policy $\pi_2(A \mid X)$ is a linear combination of a plurality of contextual decision-making policies. For example, the to-be-evaluated contextual decision-making policy $\pi_2$ $(A \mid X)$ may be a difference between two contextual decision-making policies, such that the expectation $\mathbb{E}_2[Y]$ for the to-be-evaluated contextual decision-making policy $\pi_2(A \mid X)$ corresponds to an expectation for the difference in outcomes between the two contextual decision-making policies.

Applying the method to a policy difference (as opposed to an individual policy) is particularly useful for causal inference. For example, the policy difference may be "taking an action" vs "not taking an action", such as providing a treatment vs not providing the treatment. In such cases, the calculated expectation is a measurement of the Average Treatment Effect (ATE), and this value may be used to demonstrate the benefit of taking a particular action.

For example, when evaluating ATE for two possible actions $A_1$ and $A_2$, the to-be-evaluated contextual decision-making policy $\pi_2(A \mid X)$ may be defined in the form

$$\pi_2(A \mid X) = \delta(A - A_2) - \delta(A - A_1),$$

where $\delta(a)$ is a Dirac delta function.

In previous techniques such as the IPW estimator which use the policy ratio $\rho(A, X)$ directly when evaluating $\mathbb{E}_2[Y] = \frac{1}{n}\sum_{i=1}^{n} Y_i \cdot \rho(A_i, X_i)$, the above delta function form of $\pi_2(A \mid X)$ means that most points of the dataset are excluded, and only the points where $A_i \in \{A_1, A_2\}$ are used to generate the estimate. On the other hand, the training methods of step S160 or S165 involve integration over a squared difference between $f_\Phi(Y)$ and $\rho(A, X)$ - for step S160 - or $Y\rho(A, X)$ - for step S165. This means that $f_\Phi(Y)$ and $\mathbb{E}_2[Y]$ are more likely to take into account events in the dataset $D_2$ for which the action is not exactly $A_1$ or $A_2$. This makes sense in scenarios where actions can be different from but nevertheless similar to $A_1$ or $A_2$, and so the above-described techniques can provide a more reliable ATE estimate in many circumstances.

*Empirical Validation*

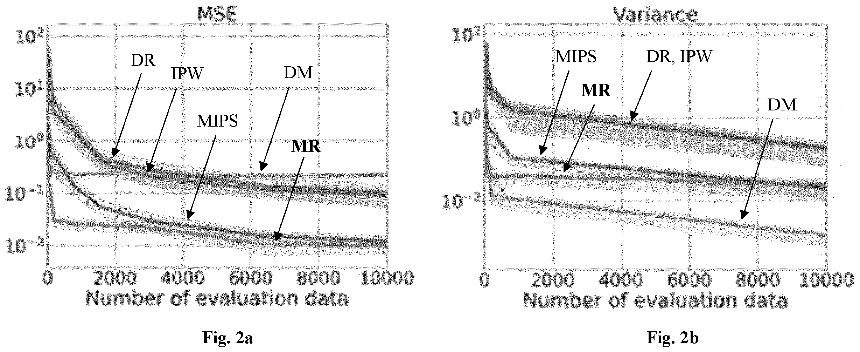

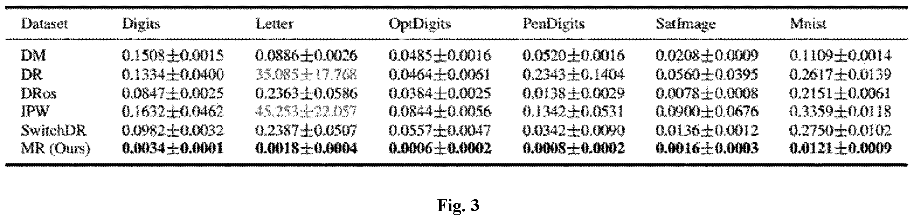

The inventors have obtained evidence of the performance of the MR estimator (i.e. the methods described above) against some known OPE methods, as illustrated in Figures 2a to 2d and 3.

An experimental setup for validating the MR estimator was reproduced from section 4 of YUTA SAITO AND THORSTEN JOACHIMS, "Off-policy evaluation for large action spaces via embeddings", proceedings of the 39th International Conference on Machine Learning, pages 19089-19122, PMLR, 2022. This experimental setup enables comparison between different estimators, and the inventors applied this setup to known DM, IPW, DR, MIPS estimators, as well as the MR estimator described in detail above and set out in the claims.

To investigate the effect of increasing policy shift, a class of policies was defined,

$$\pi^{\alpha^*}(A \mid X) = \alpha^* \cdot \mathbb{1}(A = \arg\max q(X, A')) + (1 - \alpha^*) \cdot \frac{1}{|\mathcal{A}|}$$

where $q(X, A') := \mathbb{E}[Y \mid X, A']$ and

$$\mathbb{1}(A = \arg\max q(X, A'))$$

is a policy that selects the action $A$ according to rules which maximize $q(X, A')$. The policy

$$\mathbb{1}(A = \arg\max q(X, A'))$$

may be obtained through machine learning similar to step S160 or S165 of the above described methods. Additionally,

$$\frac{1}{|\mathcal{A}|}$$

is a flat distribution policy in which all actions $A$ in the set of possible actions $\mathcal{A}$ are equally likely, and $\alpha^*$ is a mixing parameter between 0 and 1.

In each test run, an expectation value of the to-be-evaluated policy $\pi_2(A \mid X) = \pi^{\alpha^*}(A \mid X)$ by comparison to an existing policy

$$\pi_1(A \mid X) = \frac{1}{|\mathcal{A}|}$$

was calculated using a second dataset $D_2$ having p events, where p is variable for different test runs. Since $\pi_1$ corresponds to $\alpha^* = 0$, $\alpha^*$ functions as a measure of the policy shift between the existing policy and the to-be-evaluated policy. The MSE of each estimator was computed over 10 different sets of logged data replicated with different seeds. The results presented have context dimension $d = 1000$ (i.e. the contextual parameters $X$ comprise 1000 parameters which can vary in a $\mathbb{R}^{d=100}$ space), number of discrete possible actions $n_a = 100$ and a first dataset $D_1$ having a size $n = 1000$.

Figures 2a and 2b show the results with increasing values p of the size of the second dataset $D_2$ used for evaluating each OPE estimator. For these results, $\alpha^* = 0.8$. The new technique, MR, achieves the smallest MSE among all the baselines considered when p is small, with the MSE of MR being at least an order of magnitude smaller than every baseline for $p \leq 500$. This shows that MR is significantly more accurate than the baselines when the size of the evaluation data is small. As $n \to \infty$, the difference between the results for MR and MIPS decreases. However, MR attains smaller variance and MSE than MIPS generally. Moreover, Figures 2a and 2b show that while the variance of MR is greater than that of DM, MR still achieves the lowest MSE overall, owing to the high bias of DM.

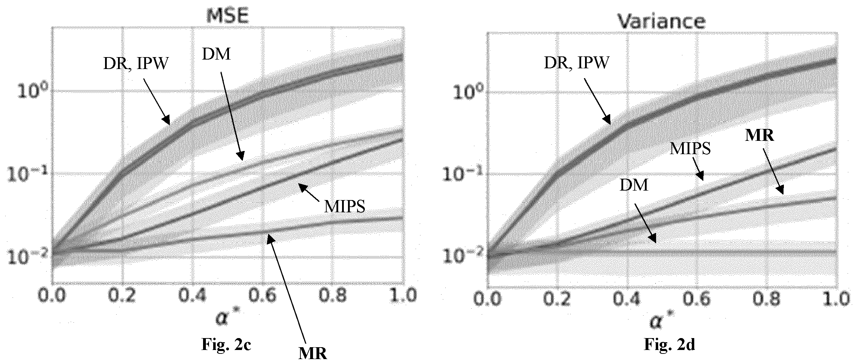

Figures 2c and 2d show the results with varying values of $\alpha^*$. For these results, the size of the second dataset is fixed as $p = 800$. Overall, the MSE of MR estimator is lowest among all the baselines. Moreover, while the MSE and variance of all estimators increase with increasing $\alpha^*$ the increase in these quantities is lower for the MR estimator than for the other baselines. Therefore, the relative performance of MR estimator improves with increasing policy shift and MR remains robust to increase in policy shift.

As illustrated in Figure 3, the inventors also transformed some well-known classification datasets into contextual bandit feedback data, so that the performance of MR and other estimators can be compared for these datasets. In the contextual bandits setup, the feature vectors of the classification data are used as contextual parameters $X$ and the actions $A$ correspond to the possible classification labels. The outcome $Y$ is whether or not the classification is correct (i.e. whether or not $A$ matches ground truth information provided in the dataset). The existing policy $\pi_1(A \mid X)$ is unknown, and therefore it is necessary to initially obtain an estimate of the existing policy $\hat{\pi}_1(A \mid X)$ (for example as described above). Figure 3 shows results when $p = 1000$ for the second dataset $D_2$ and $n = 500$ for the first dataset $D_1$. The table shows that across all datasets, MR achieves the lowest MSE among all methods. Moreover, for the Letter dataset the IPW and DR yield large bias and variance arising from poor policy estimates $\hat{\pi}_1(A \mid X)$. Despite this, the MR estimator, which utilizes the same $\hat{\pi}_1(A \mid X)$ for the training of $f_\Phi(Y)$, leads to much more accurate results.

*Computer Implementation of Method*

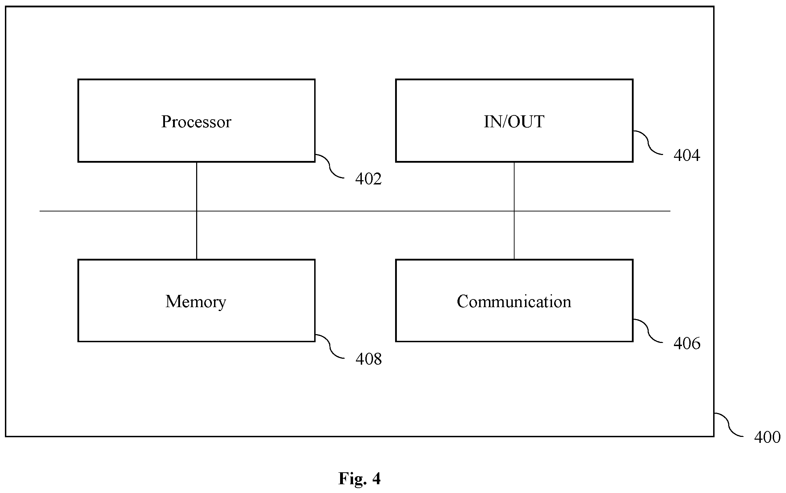

Figure 4 is a block diagram illustrating an example computing system 400 that may be used to implement any of the methods described here.

Computing apparatus/system 400 includes one or more processor unit(s) 402, an input/output unit 404, communications unit/interface 406, a memory unit 408 in which the one or more processor unit(s) 402 are connected to the input/output unit 404, communications unit/interface 406, and the memory unit 408. The input/output unit 404 may for example receive one or more event datasets, to-be-evaluated policies and/or existing policies and output an evaluation result and/or a selected to-be-used policy.

The computing apparatus/system 400 may comprise a single computer apparatus, or one or more computer apparatuses networked together. The computing apparatus/system 400 may be a computer or supercomputer/processing facility or hardware/software suitable for implementing any of the methods described here.

The communications interface 406 may connect the computing apparatus/system 400, via a communication network, with one or more services, devices, the server system(s) and/or cloud-based platforms.

The memory unit 408 may store one or more program instructions, code or components such as, by way of example only but not limited to, an operating system and/or code/component(s) associated with the methods described here, additional data, applications, application firmware/software and/or further program instructions, code and/or components associated with implementing the functionality and/or one or more function(s) or functionality associated with the methods described here.

A system in which the methods described here may be implemented may include components such as, but not limited to, a plurality of central processing units (CPU), e.g., similar to controller 400, or any other suitable multi-purpose or specific processors or controllers, a plurality of input units, a plurality of output units, a plurality of memory units, and a plurality of storage units. Other suitable hardware components and/or software components may be included. A system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

Any of the methods described here may be implemented in the form of a computer program comprising instructions which, when executed by a processor or controller, carry out methods disclosed herein.

Any of the methods described here may be implemented in the form of a computer readable medium or an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, a storage medium may be provided such as memory, computer-executable instructions such as executable code and a controller such as controller. Any of the methods described here may be implemented in an electronic device comprising a processor and a memory, wherein the processor is configured to implement any of the methods described here.

Any of the methods described here may be implemented in the form of a data signal comprising instructions which, when executed by a processor or controller, carry out methods disclosed herein. The data signal may, for example, be a signal that is communicated through a network. For example, the data signal may be downloaded onto a computer-implemented system, in order to store the instructions on a computer-readable medium and/or execute the instructions using a processor or controller.

Unless explicitly stated, the methods described here are not constrained to a particular order or sequence. Additionally, some of the described methods or elements thereof can occur or be performed at the same point in time.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

It is to be understood that a computing device used to implement any of the methods described here may be a distributed system. Thus, for instance, several devices may be in communication by way of a network connection and may collectively perform tasks described as being performed by the computing device.

It will be appreciated that a computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The invention is not limited to solutions to any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

Features discussed above may be combined as appropriate, as would be apparent to a person skilled in the art, and may be combined except where it is expressly provided that such a combination is not possible or the person skilled in the art would understand that such a combination is self-evidently not possible.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

The subject-matter of the description also includes the following clauses.

Clause 1: A computer-implemented method of policy evaluation for a contextual decision-making policy, wherein the contextual decision-making policy is used to make one or more decisions, where the outcome of each decision depends upon a context in which the decision is made, the method comprising:

obtaining an existing contextual decision-making policy;

obtaining a first dataset of decisions made using the existing contextual decision-making context, wherein the first dataset further includes the respective outcome and context of each decision;

obtaining a to-be-evaluated contextual decision-making policy;

using machine learning to train an outcome model for the to-be-evaluated contextual decision-making policy, based on the existing contextual decision-making policy, the to-be-evaluated contextual decision-making policy and the first dataset; and

estimating an expectation for the to-be-evaluated contextual decision-making policy, based on the outcome model.

Clause 2: A computer-implemented method according to clause 1, wherein using machine learning to train the outcome probability model comprises:

calculating a policy ratio between the to-be-evaluated contextual decision-making policy and the existing contextual decision-making policy; and

calculating a weighted sum of values of the policy ratio, wherein the sum is weighted based on a density distribution of the first dataset.

Clause 3: A computer-implemented method according to clause 2, wherein the outcome model trained by the training is a weighted outcome probability model,
wherein the density distribution of the first dataset has dimensions of action, context and outcome, and the weighted sum is further weighted by the outcome.

Clause 4: A computer-implemented method according to clause 1 or clause 2, wherein the outcome model trained by the training is a simple outcome probability model,

the method further comprising calculating a weighted outcome probability model based on the simple outcome probability model, wherein each outcome probability of the weighted outcome probability model is weighted by the respective outcome,

wherein the calculating the expectation for the to-be-evaluated contextual decision-making policy is performed based on the weighted outcome probability model.

Clause 5: A computer-implemented method according to any of clauses 1 to 4, further comprising:

calculating an expectation for existing contextual decision-making policy based on the first dataset; and

comparing the estimated expectation for the to-be-evaluated contextual decision-making policy to the calculated expectation for existing contextual decision-making policy to determine whether the to-be-evaluated contextual decision-making policy is superior to the existing contextual decision-making policy.

Clause 6: A method according to any of clauses 1 to 5, comprising:

estimating an expectation for each of a plurality of contextual decision-making policies; and

selecting a to-be-used contextual decision-making policy based on the estimated expectation associated with each of the plurality of contextual decision-making policies.

Clause 7: A method according to any of clauses 1 to 6, wherein the to-be-evaluated contextual decision-making policy is a linear combination of a plurality of contextual decision-making policies.

Clause 8: A method according to clause 7, wherein the to-be-evaluated contextual decision-making policy is a difference between two contextual decision-making policies, such that the expectation for the to-be-evaluated contextual decision-making policy corresponds to an expectation for the difference in outcomes between the two contextual decision-making policies.

Clause 9: A method according to any of clauses 1 to 8, wherein the existing contextual decision-making policy and the to-be-evaluated contextual decision-making policy are policies for making a plurality of decisions, wherein each decision comprises selecting an advertisement to be presented to a respective user based on a context comprising a respective user profile of the user, and the user is any one of a plurality of possible users.

Clause 10: A method according to clause 9, further comprising, if the estimated expectation for the to-be-evaluated contextual decision-making policy exceeds a threshold:

using the to-be-evaluated contextual decision-making policy to select an advertisement to be presented to a first user of the plurality of possible users, based on a context comprising a respective user profile of the first user; and

presenting the selected advertisement to the first user.

Clause 11: A method according to clause 10, wherein the threshold is an expectation for the existing contextual decision-making policy.

Clause 12: A computer-implemented method of policy evaluation for a contextual decision-making policy, wherein the contextual decision-making policy is a probability distribution $\pi(A \mid X)$ for determining one or more decision parameters $A$ based on one or more contextual parameters $X$, and the contextual decision-making policy is applicable to a decision in which an outcome $Y$ has a probability distribution $p(Y \mid X, A)$, the method comprising:

obtaining an existing contextual decision-making policy $\pi_1(A \mid X)$;

obtaining a first dataset $D_1$ comprising $n$ events $\{(X_i, A_i, Y_i)\}_{i=1}^n$ generated by making a respective $n$ decisions according to the existing contextual decision-making policy $\pi_1(A \mid X)$;

obtaining a to-be-evaluated contextual decision-making policy $\pi_2(A \mid X)$;

calculating a policy ratio $\rho(A, X)$, wherein:

$$\rho(A, X) = \frac{\pi_2(A \mid X)}{\pi_1(A \mid X)};$$

calculating a multi-dimensional density distribution $d_1(X, A, Y)$ of points of the first dataset $D_1$, wherein the multi-dimensional density distribution $d_1(X, A, Y)$ has dimensions of the decision parameters $A$, the contextual parameters $X$ and the outcome $Y$;

using machine learning to train a parametric model $f_\Phi(Y)$, wherein the parameters $\Phi$ of the parametric model $f_\Phi(Y)$ are trained to minimize the following expression:

$$\mathbb{E}[(\beta \cdot \rho(A, X) - f_\Phi(Y))^2] := \int (\beta \cdot \rho(A, X) - f_\Phi(Y))^2 \cdot d_1(X, A, Y) \cdot dY \cdot dA \cdot dX;$$

and

estimating an expectation $\mathbb{E}_2[Y]$ for the to-be-evaluated contextual decision-making policy $\pi_2(A \mid X)$ based on a second dataset $D_2$, wherein the second dataset $D_2$ comprises $p$ events $\{(X_j, A_j, Y_j)\}_{j=1}^p$ generated by making a respective $p$ decisions according to the existing contextual decision-making policy $\pi_1(A \mid X)$, and

$$\mathbb{E}_2[Y] = \frac{1}{n} \sum_{j=1}^p \frac{Y_j}{\beta_j} \cdot f_\Phi(Y_j),$$

wherein either:

$\beta$ and $\beta_j$ are equal to 1, or
$\beta$ is equal to $Y$ and $\beta_j$ is equal to $Y_j$.

Clause 12 optionally incorporates the features of any of clauses 1 to 11.

Clause 13: A method according to clause 12, further comprising:

calculating a one-dimensional density distribution $d_1(Y)$ of points of the first dataset $D_1$, wherein the one-dimensional density distribution $d_1(Y)$ has a dimension of the outcome $Y$;

calculating an expectation $\mathbb{E}_1[Y]$ of the outcome $Y$ for the existing contextual decision-making policy $\pi_1(A \mid X)$ as

$$\mathbb{E}_1[Y] = \int Y \cdot d_1(Y) \cdot dY;$$

and

comparing the estimated expectation $\mathbb{E}_2[Y]$ to the expectation $\mathbb{E}_1[Y]$ to determine whether the to-be-evaluated contextual decision-making policy $\pi_2(A \mid X)$ is superior to the existing contextual decision-making

policy $\pi_1(A \mid X)$.

Clause 14: A method according to clause 13, wherein calculating the one-dimensional density distribution $d_1(Y)$ comprises:

integrating the multi-dimensional density distribution $d_1(X, A, Y)$ across the dimensions of the decision parameters $A$ and the contextual parameters $X$.

Clause 15: A method according to any of clauses 12 to 14, comprising:

estimating the expectation $\mathbb{E}_j[Y]$ of the outcome $Y$ for each of a plurality of contextual decision-making policies $\pi_j(A \mid X)$; and

selecting a to-be-used contextual decision-making policy based on the estimated expectation $\mathbb{E}_j[Y]$ associated with each of the plurality of contextual decision-making policies $\pi_j(A \mid X)$.

Clause 16: A method according to any of clauses 12 to 15, wherein the first dataset $D_1$ and the second dataset $D_2$ are the same dataset.

Clause 17: A method according to any of clauses 12 to 15, wherein the first dataset $D_1$ and the second dataset $D_2$ are different datasets, the method further comprising obtaining the second dataset $D_2$.

Clause 18: A method according to any of clauses 12 to 17, wherein obtaining the existing contextual decision-making policy $\pi_1(A \mid X)$ comprises:

estimating the existing contextual decision-making policy $\pi_1(A \mid X)$ by determining a probability distribution $\hat{\pi}_1(A \mid X)$ of the decision parameters $A$ and the contextual parameters $X$ in q events $\{(X_i, A_i, Y_i)\}_{i=1}^{q}$ of the first dataset $D_1$, wherein $q \leq n$; or

obtaining a third second dataset $D_3$ comprising s events $\{(X_k, A_k, Y_k)\}_{k=1}^{s}$ generated by making a respective s decisions according to the existing contextual decision-making policy $\pi_1(A \mid X)$, and estimating the existing contextual decision-making policy $\pi_1(A \mid X)$ by determining a probability distribution $\pi_1(A \mid X)$ of the decision parameters $A$ and the contextual parameters $X$ in the s events $\{(X_k, A_k, Y_k)\}_{k=1}^{s}$ of the third dataset $D_3$.

Clause 19: A method according to any of clauses 12 to 18, wherein the to-be-evaluated contextual decision-making policy $\pi_2(A \mid X)$ is a linear combination of a plurality of contextual decision-making policies.

Clause 20: A method according to clause 19, wherein the to-be-evaluated contextual decision-making policy $\pi_2(A \mid X)$ is a difference between two contextual decision-making policies, such that the expectation $\mathbb{E}_2[Y]$ for the to-be-evaluated contextual decision-making policy $\pi_2(A \mid X)$ corresponds to an expectation for the difference in outcomes between the two contextual decision-making policies.

Clause 21: A method according to any of clauses 12 to 20, wherein the existing contextual decision-making policy $\pi_1(A \mid X)$ and the to-be-evaluated contextual decision-making policy $\pi_2(A \mid X)$ are policies for making a plurality of decisions, wherein each decision comprises selecting an advertisement to be presented to a respective user based on contextual parameters comprising a respective user profile of the user, and the user is any one of a plurality of possible users.

Clause 22: A method according to clause 21, further comprising, if the expectation $\mathbb{E}_2[Y]$ exceeds a threshold:

using the to-be-evaluated contextual decision-making policy $\pi_2(A \mid X)$ to select an advertisement to be presented to a first user of the plurality of possible users, based on one or more contextual parameters comprising a respective user profile of the first user; and

presenting the selected advertisement to the first user.

Clause 23: A method according to clause 22, wherein the threshold is an expectation $\mathbb{E}_1[Y]$ of the outcome $Y$ for the existing contextual decision-making policy $\pi_1(A \mid X)$.

Clause 24: A computer-implemented system configured to perform a method according to any of clauses 1 to 23.

Clause 25: A computer-implemented system for policy evaluation for a contextual decision-making policy, wherein the contextual decision-making policy is used to make one or more decisions, where the outcome of each decision depends upon a context in which the decision is made, the system is configured to:

obtain an existing contextual decision-making policy;

obtain a first dataset of decisions made using the existing contextual decision-making context, wherein the first dataset further includes the respective outcome and context of each decision;

obtain a to-be-evaluated contextual decision-making policy;

use machine learning to train an outcome model for the to-be-evaluated contextual decision-making policy, based on the existing contextual decision-making policy, the to-be-evaluated contextual decision-making policy and the first dataset; and

estimate an expectation for the to-be-evaluated contextual decision-making policy, based on the outcome model.

Clause 26: A system according to claim 25, configured to perform a method according to any of clauses 2 to 23.

Clause 27: A system according to claim 25, the system comprising one or more processors and one or more memory elements, the one or more memory elements storing instructions which, when executed by the one or more processors, cause the processors to perform a method according to any of clauses 1 to 23.

Clause 28: A computer program comprising instructions which, when executed by a processor, cause the processor to perform a method according to any of clauses 1 to 23.

Clause 29: A computer-readable medium storing instructions which, when executed by a processor, cause the processor to perform a method according to any of clauses 1 to 23.

Clause 30: A data signal comprising instructions which, when executed by a processor, cause the processor to perform a method according to any of clauses 1 to 23.

**Claims**

1. A computer-implemented method of policy evaluation for a contextual decision-making policy, wherein the contextual decision-making policy is used to make one or more decisions, where the outcome of each decision depends upon a context in which the decision is made, the method comprising:

obtaining an existing contextual decision-making policy;
obtaining a first dataset of decisions made using the existing contextual decision-making context, wherein the first dataset further includes the respective outcome and context of each decision;
obtaining a to-be-evaluated contextual decision-making policy;
using machine learning to train an outcome model for the to-be-evaluated contextual decision-making policy, based on the existing contextual decision-making policy, the to-be-evaluated contextual decision-making policy and the first dataset; and
estimating an expectation for the to-be-evaluated contextual decision-making policy, based on the outcome model.

2. A computer-implemented method according to claim 1, wherein using machine learning to train the outcome probability model comprises:

calculating a policy ratio between the to-be-evaluated contextual decision-making policy and the existing contextual decision-making policy; and
calculating a weighted sum of values of the policy ratio, wherein the sum is weighted based on a density distribution of the first dataset.

3. A computer-implemented method according to claim 2, wherein the outcome model trained by the training is a weighted outcome probability model,
wherein the density distribution of the first dataset has dimensions of action, context and outcome, and the weighted sum is further weighted by the outcome.

4. A computer-implemented method according to claim 1 or claim 2, wherein the outcome model trained by the training is a simple outcome probability model,

the method further comprising calculating a weighted outcome probability model based on the simple outcome probability model, wherein each outcome probability of the weighted outcome probability model is weighted by the respective outcome,
wherein the calculating the expectation for the to-be-evaluated contextual decision-making policy is performed based on the weighted outcome probability model.

5. A computer-implemented method according to any of claims 1 to 4, further comprising:

calculating an expectation for existing contextual decision-making policy based on the first dataset; and
comparing the estimated expectation for the to-be-evaluated contextual decision-making policy to the calculated expectation for existing contextual decision-making policy to determine whether the to-be-evaluated contextual decision-making policy is superior to the existing contextual decision-making policy.

6. A method according to any of claims 1 to 5, comprising:

estimating an expectation for each of a plurality of contextual decision-making policies; and
selecting a to-be-used contextual decision-making policy based on the estimated expectation associated with each of the plurality of contextual decision-making policies.

7. A method according to any of claims 1 to 6, wherein the to-be-evaluated contextual decision-making policy is a linear combination of a plurality of contextual decision-making policies.

8. A method according to claim 7, wherein the to-be-evaluated contextual decision-making policy is a difference between two contextual decision-making policies, such that the expectation for the to-be-evaluated contextual decision-making policy corresponds to an expectation for the difference in outcomes between the two contextual decision-making policies.

9. A method according to any of claims 1 to 8, wherein the existing contextual decision-making policy and the to-be-evaluated contextual decision-making policy are policies for making a plurality of decisions, wherein each decision comprises selecting an advertisement to be presented to a respective user based on a context comprising a respective user profile of the user, and the user is any one of a plurality of possible users.

10. A method according to claim 9, further comprising, if the estimated expectation for the to-be-evaluated contextual decision-making policy exceeds a threshold:

using the to-be-evaluated contextual decision-making policy to select an advertisement to be presented to a first user of the plurality of possible users, based on a context comprising a respective user profile of the first user; and
presenting the selected advertisement to the first user.

11. A method according to claim 10, wherein the threshold is an expectation for the existing contextual decision-making policy.

12. A computer-implemented method according to any of claims 1 to 11, wherein each contextual decision-making policy is a probability distribution $\pi(A \mid X)$ for determining one or more decision parameters $A$ based on one or more contextual parameters $X$, and each contextual decision-making policy is applicable to a decision in which an outcome $Y$ has a probability distribution $p(Y \mid X, A)$, the method comprising:

obtaining the existing contextual decision-making policy $\pi_1(A \mid X)$;

obtaining the first dataset $D_1$ comprising $n$ events $\{(X_i, A_i, Y_i)\}_{i=1}^{n}$ generated by making a respective $n$ decisions according to the existing contextual decision-making policy $\pi_1(A \mid X)$;

obtaining the to-be-evaluated contextual decision-making policy $\pi_2(A \mid X)$;

calculating a policy ratio $\rho(A, X)$, wherein:

$$\rho(A, X) = \frac{\pi_2(A \mid X)}{\pi_1(A \mid X)};$$

calculating a multi-dimensional density distribution $d_1(X, A, Y)$ of points of the first dataset $D_1$, wherein the multi-dimensional density distribution $d_1(X, A, Y)$ has dimensions of the decision parameters $A$, the contextual parameters $X$ and the outcome $Y$;

using machine learning to train the outcome model $f_\Phi(Y)$, wherein parameters $\Phi$ of the parametric model $f_\Phi(Y)$ are trained to minimize the following expression:

$$\mathbb{E}[(\beta \cdot \rho(A, X) - f_\Phi(Y))^2] := \int (\beta \cdot \rho(A, X) - f_\Phi(Y))^2 \cdot d_1(X, A, Y) \cdot dY \cdot dA \cdot dX;$$

and

estimating the expectation $\mathbb{E}_2[Y]$ for the to-be-evaluated contextual decision-making policy $\pi_2(A \mid X)$ based on

a second dataset $D_2$, wherein the second dataset $D_2$ comprises $p$ events $\{(X_j, A_j, Y_j)\}_{j=1}^{p}$ generated by making a respective p decisions according to the existing contextual decision-making policy $\pi_1(A \mid X)$, and

$$\mathbb{E}_2[Y] = \frac{1}{n} \sum_{j=1}^{p} \frac{Y_j}{\beta_j} \cdot f_\Phi(Y_j),$$

wherein either:

$\beta$ and $\beta_j$ are equal to 1, or
$\beta$ is equal to $Y$ and $\beta_j$ is equal to $Y_j$.

13. A computer-implemented system configured to perform a method according to any of claims 1 to 12.

14. A computer program comprising instructions which, when executed by a processor, cause the processor to perform a method according to any of claims 1 to 12.

15. A computer-readable medium storing instructions which, when executed by a processor, cause the processor to perform a method according to any of claims 1 to 12.

```
┌─────────────────────────────────────────────────────────────┐
│   Obtain a first decision-making policy $\pi_1(A \mid X)$     │──⌐ S110
└─────────────────────────────────────────────────────────────┘
                              │
                              ▼
┌─────────────────────────────────────────────────────────────┐
│  Obtain a first dataset $D_1$ generated using the first       │──⌐ S120
│  decision-making policy                                       │
└─────────────────────────────────────────────────────────────┘
                              │
                              ▼
┌─────────────────────────────────────────────────────────────┐
│  Obtain a second decision-making policy $\pi_2(A \mid X)$    │──⌐ S130
└─────────────────────────────────────────────────────────────┘
                              │
                              ▼
┌─────────────────────────────────────────────────────────────┐
│  Calculate a policy ratio $\rho(A, X)$ between the first and  │──⌐ S140
│  second decision-making policies                              │
└─────────────────────────────────────────────────────────────┘
                              │
                              ▼
┌─────────────────────────────────────────────────────────────┐
│  Calculate a density distribution $d_1(X, A, Y)$ for the      │──⌐ S150
│  first dataset $D_1$                                          │
└─────────────────────────────────────────────────────────────┘
                              │
                              ▼
┌─────────────────────────────────────────────────────────────┐
│  Train parametric model $f_\Phi(Y)$ to minimize               │──⌐ S160
│  $\mathbb{E}[(\rho(A, X) - f_\Phi(Y))^2]$                     │
└─────────────────────────────────────────────────────────────┘
                              │
                              ▼
┌─────────────────────────────────────────────────────────────┐
│  Estimate expectation $\mathbb{E}_2[Y]$ for policy            │──⌐ S170
│  $\pi_2(A \mid X)$ as $\frac{1}{n}\sum_{j=1}^{p} Y_j \cdot    │
│  f_\Phi(Y_j)$                                                 │
└─────────────────────────────────────────────────────────────┘
```

**Fig. 1a**

```
┌─────────────────────────────────────────────────────────┐
│   Obtain a first decision-making policy $\pi_1(A \mid X)$ │   S110
└─────────────────────────────────────────────────────────┘
                          │
                          ▼
┌─────────────────────────────────────────────────────────┐
│ Obtain a first dataset $D_1$ generated using the first   │   S120
│              decision-making policy                      │
└─────────────────────────────────────────────────────────┘
                          │
                          ▼
┌─────────────────────────────────────────────────────────┐
│ Obtain a second decision-making policy $\pi_2(A \mid X)$ │   S130
└─────────────────────────────────────────────────────────┘
                          │
                          ▼
┌─────────────────────────────────────────────────────────┐
│ Calculate a policy ratio $\rho(A, X)$ between the first  │   S140
│         and second decision-making policies              │
└─────────────────────────────────────────────────────────┘
                          │
                          ▼
┌─────────────────────────────────────────────────────────┐
│ Calculate a density distribution $d_1(X, A, Y)$ for the  │   S150
│              first dataset $D_1$                         │
└─────────────────────────────────────────────────────────┘
                          │
                          ▼
┌─────────────────────────────────────────────────────────┐
│   Train parametric model $f_\Phi(Y)$ to minimize         │
│                                                          │   S165
│   $\mathbb{E}[(Y\rho(A, X) - f_\Phi(Y))^2]$              │
└─────────────────────────────────────────────────────────┘
                          │
                          ▼
┌─────────────────────────────────────────────────────────┐
│  Estimate expectation $\mathbb{E}_2[Y]$ for policy       │
│  $\pi_2(A \mid X)$ as                                    │   S175
│                                                          │
│  $\frac{1}{n}\sum_{j=1}^{p} f_\Phi(Y_j)$                 │
└─────────────────────────────────────────────────────────┘
```

**Fig. 1b**

**Fig. 2a**

**Fig. 2b**

Fig. 2d

Fig. 2c

| Dataset | Digits | Letter | OptDigits | PenDigits | SatImage | Mnist |
|---|---|---|---|---|---|---|
| DM | 0.1508±0.0015 | 0.0886±0.0026 | 0.0485±0.0016 | 0.0520±0.0016 | 0.0208±0.0009 | 0.1109±0.0014 |
| DR | 0.1334±0.0400 | 35.085±17.768 | 0.0464±0.0061 | 0.2343±0.1404 | 0.0560±0.0395 | 0.2617±0.0139 |
| DRos | 0.0847±0.0025 | 0.2363±0.0586 | 0.0384±0.0025 | 0.0138±0.0029 | 0.0078±0.0008 | 0.2151±0.0061 |
| IPW | 0.1632±0.0462 | 45.253±22.057 | 0.0844±0.0056 | 0.1342±0.0531 | 0.0900±0.0676 | 0.3359±0.0118 |
| SwitchDR | 0.0982±0.0032 | 0.2387±0.0507 | 0.0557±0.0047 | 0.0342±0.0090 | 0.0136±0.0012 | 0.2750±0.0102 |
| MR (Ours) | **0.0034±0.0001** | **0.0018±0.0004** | **0.0006±0.0002** | **0.0008±0.0002** | **0.0016±0.0003** | **0.0121±0.0009** |

**Fig. 3**

Fig. 4

Europäisches
Patentamt

European
Patent Office

Office européen
des brevets

# EUROPEAN SEARCH REPORT

Application Number

EP 23 21 0772

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAUFIQ MUHAMMAD FAAIZ ET AL: "Marginal Density Ratio for Off-Policy Evaluation in Contextual Bandits", ICONFERENCE, [Online] 2 November 2023 (2023-11-02), pages 1-44, XP093150251, ISSN: 2331-8422 Retrieved from the Internet: URL:https://openreview.net/pdf?id=noyleECBam> [retrieved on 2024-04-09] * abstract; sections 1, 2, 3, 3.1, 3.1.2, 5, F.1.1 * | 1-15 | INV. G06N7/00 G06N20/00 |
| X,D | YUTA SAITO ET AL: "Off-Policy Evaluation for Large Action Spaces via Embeddings", ARXIV.ORG, CORNELL UNIVERSITY LIBRARY, 201 OLIN LIBRARY CORNELL UNIVERSITY ITHACA, NY 14853, 16 June 2022 (2022-06-16), XP091248100, * abstract; sections 2, 3, 4 * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 11 April 2024 | Tebbal Barracosa, B |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUTA SAITO** ; **THORSTEN JOACHIMS**. Off-policy evaluation for large action spaces via embeddings. *proceedings of the 39th International Conference on Machine Learning*, 2022, 19089-19122